(19)

Europäisches
Patentamt
European
Patent Office
Office européen
des brevets

(11)  **EP 3 385 335 A1**

(12)  **EUROPEAN PATENT APPLICATION**

(43) Date of publication:
**10.10.2018  Bulletin 2018/41**

(51) Int Cl.:
*C09C 1/02* (2006.01)        *D21H 17/67* (2006.01)

(21) Application number: **17164661.5**

(22) Date of filing: **03.04.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Omya International AG
4665 Oftringen (CH)**

(72) Inventors:
- **WERNER, Dennis
  4600 Olten (CH)**
- **FOUAL, Djillali
  4665 Oftringen (CH)**

(74) Representative: **Chwalka, Bettina
Maiwald Patentanwalts- und
Rechtsanwaltsgesellschaft mbH
Elisenhof
Elisenstraße 3
80335 München (DE)**

(54)  **PIGMENT COMPOSITION COMPRISING SURFACE MODIFIED CALCIUM CARBONATE AND GROUND NATURAL CALCIUM CARBONATE**

(57)    The present invention relates to an aqueous pigment composition comprising a blend of ground natural calcium carbonate (GNCC) and surface modified calcium carbonate (MCC) at a specific ratio and each having a specific particle size distribution. A process for producing the inventive pigment composition is also disclosed. The inventive pigment composition may be used in paints or coatings.

EP 3 385 335 A1

**Description**

The present invention relates to an aqueous pigment composition comprising a blend of ground natural calcium carbonate (GNCC) and surface modified calcium carbonate (MCC). The invention further relates to a process for producing the inventive pigment composition and its use in paints and coatings.

Commonly used pigments in the field of paints and coatings include, for example, clay, mica, silica, talc, titanium dioxide or different types of calcium carbonate such as ground natural calcium carbonate or synthetic calcium carbonate and surface modified variants of the aforementioned calcium carbonates.

In case of opaque paints or coats, pigments providing for high opacity and high contrast are generally preferred. Further desired properties may include, for example, a high whiteness degree, a low yellowness degree and good matting properties.

In order to achieve these goals, high performance pigments (in particular titanium dioxide or surface modified calcium carbonate) are often required and corresponding paints or coatings must therefore be produced at high costs. Thus, there is a general need for more efficient pigments in terms of opacity, contrast and the like or a general need for alternative pigments which may be used in the production of paints and coatings at less costs.

In this respect, EP 2 684 916 A1 discloses a process for producing surface modified calcium carbonate from a calcium carbonate containing mineral slurry in the presence of at least one water-soluble acid and carbon dioxide under stirring conditions. The surface modified calcium carbonate may be used as matting agent in paints and coatings.

Likewise, EP 2 264 108 A1 and EP 2 264 109 A1 disclose processes for preparing surface modified calcium carbonate using strong and medium-strong to strong acids, respectively, and carbon dioxide.

To further reduce the amount of surface modified calcium carbonate in carbonate-based pigment compositions, which is also expensive compared to conventional ground natural calcium carbonate, EP 3 085 742 A1 proposes a blend of surface modified calcium carbonate comprising particles (MCC) and precipitated calcium carbonate comprising particles (PCC). The blend being in the form of an aqueous slurry or the corresponding dried pigment slurry may be used in paper, paper coating, tissue paper, digital photo paper, paints, coatings, adhesives, plastics, waste water treating or waste water treating agents.

As a further alternative, US 2014/0158022 A1 discloses the use of kaolin/calcium carbonate blends in mineral compositions for use in paints and coatings. Said blend comprises kaolin, wherein between 88 and 98% of the particles should be smaller than 2 microns and only between 10 and 30% should be smaller than 0.2 microns, and calcium carbonate, wherein between 88 and 96% of the particles should be smaller than 2 microns and between 4 and 14% should be smaller than 0.2 microns.

However, there is still a continuous need for alternative pigments and pigment compositions providing better performance (e.g. in terms of opacity or contrast ratio, whiteness, yellowness or matting properties) or which may be produced at less costs. Such alternative pigments and corresponding compositions may be used, for example, as an enhancer for established high performance pigments, such as titanium dioxide.

Accordingly, it is one object of the present invention to provide a pigment or a pigment composition having improved optical properties. In particular, it is an object of the present invention to provide a pigment or pigment composition with improved optical properties when applied in paints or coatings.

One particular aim is the provision of pigments, pigment compositions and corresponding paints or coatings providing improved opacity or improved contrast properties.

Still another object may be seen in the provision of pigments, pigment compositions and corresponding paints or coatings which have improved properties in terms of yellowness (preferably reduced yellowness) and whiteness (preferably increased whiteness).

Still another object of the present invention may be seen in the provision of pigments, pigment compositions and corresponding paints or coatings which may be produced at lower costs or which may be used at lower costs compared to conventional (high performance) pigments. Therefore, another object may be seen in the provision of a pigment or pigment composition which may be used as an enhancer for known (high performance) pigments without negatively affecting the optical properties of the final product, for example in terms of opacity, contrast ratio, yellowness or matting properties.

Another particular aim may be seen in the provision of a pigment or a corresponding composition which may be used as a first pigment together with a known second (high performance) pigment, thereby enhancing the optical properties of that known second pigment. It is thus another object of the present invention to reduce the overall consumption of and the costs for conventional (high performance) pigments while maintaining or improving the optical properties of corresponding paints and coatings.

The preparation of known pigments or pigment compositions for use in paints or coatings typically comes along with a low productivity and high energy consumption for drying the materials and it is thus highly energy and cost consuming. As a result, conventional pigment compositions are typically obtained in the form of aqueous suspensions comprising relatively high amounts of water. In turn, existing pigment compositions having a high solids content typically have a high viscosity. Another object of the present invention may therefore be seen in the provision of pigments or pigment compositions with high solids content at acceptable or low viscosity.

The foregoing and other problems may be solved by the subject-matter as defined herein in the independent claims.

A first aspect of the present invention relates to an aqueous pigment composition comprising:

(i) ground natural calcium carbonate (GNCC) having a weight median particle diameter $d_{50}$ of 1.5 $\mu$m or less and a weight-based particle diameter $d_{98}$ of 5 $\mu$m or less; and

(ii) surface modified calcium carbonate (MCC) being a reaction product of ground natural calcium carbonate (GNCC) and/or precipitated calcium carbonate (PCC) treated with $CO_2$ and one or more $H_3O^+$ ion donors, wherein the $CO_2$ is formed in situ by the $H_3O^+$ ion donors treatment and/or is supplied from an external source, said surface modified calcium carbonate (MCC) having a volume median particle diameter $d_{50}$ of 1.3 $\mu$m or less and a volume-based particle diameter $d_{98}$ of 10 $\mu$m or less;

characterized in that the ground natural calcium carbonate (GNCC) and the surface modified calcium carbonate (MCC) are present in the aqueous pigment composition at a ratio of from 95:5 to 5:95, based on dry weights, wherein the aqueous pigment composition has a total solids content of from 50 to 85 wt%, based on the total weight of the aqueous pigment composition.

The inventors surprisingly found that an aqueous pigment composition comprising a blend of two calcium carbonate pigments, wherein the first pigment is a ground natural calcium carbonate (GNCC) and the second pigment is a surface modified calcium carbonate (MCC), provides improved optical properties, e.g. in terms of contrast ratio, yellowness and matting properties, compared to conventional ground calcium carbonate. Both calcium carbonate pigments contained in the blend have a specific particle size distribution: The ground natural calcium carbonate (GNCC) has a weight median particle diameter $d_{50}$ of 1.5 $\mu$m or less and a weight-based particle diameter $d_{98}$ of 5 $\mu$m or less and the surface modified calcium carbonate (MCC) has a volume median particle diameter $d_{50}$ of 1.3 $\mu$m or less and a volume-based particle diameter $d_{98}$ of 10 $\mu$m or less. According to the present invention, the ground natural calcium carbonate (GNCC) and the surface modified calcium carbonate (MCC) are present in the aqueous pigment composition at a ratio of from 95:5 to 5:95. The inventors further discovered that the aqueous compositions of the present invention provide good optical properties when used in paint and coating composition also at high solids content and good viscosity. The aqueous pigment composition has a total solids content of from 50 to 85 wt%, based on the total weight of the aqueous pigment composition. Surprisingly, the inventive pigment composition may be used as a titanium dioxide enhancer allowing for a reduction of the titanium dioxide consumption while, at the same time, satisfactory or even improved optical properties may be achieved (e.g. contrast ratio, yellowness and matting properties).

Therefore, another aspect of the present invention relates to a process for preparing the inventive aqueous pigment composition, the process comprising the following steps:

(a) providing an aqueous suspension of ground natural calcium carbonate (GNCC) having a weight median particle diameter $d_{50}$ of 1.5 $\mu$m or less and a weight-based particle diameter $d_{98}$ of 5 $\mu$m or less;

(b) providing an aqueous suspension of surface modified calcium carbonate (MCC) being a reaction product of ground natural calcium carbonate (GNCC) and/or precipitated calcium carbonate (PCC) treated with $CO_2$ and one or more $H_3O^+$ ion donors, wherein the $CO_2$ is formed in situ by the $H_3O^+$ ion donors treatment and/or is supplied from an external source, said surface modified calcium carbonate (MCC) having a volume median particle diameter $d_{50}$ of 1.3 $\mu$m or less and a volume-based particle diameter $d_{98}$ of 10 $\mu$m or less;

(c) contacting the aqueous suspension provided in step (a) and the aqueous suspension provided in step (b) to obtain an aqueous pigment composition comprising ground natural calcium carbonate (GNCC) and surface modified calcium carbonate (MCC); and

(d) optionally, adjusting the solids content of the aqueous pigment composition of step (c);

characterized in that the ground natural calcium carbonate (GNCC) and the surface modified calcium carbonate (MCC) are present in the aqueous pigment composition at a ratio of from 95:5 to 5:95, based on dry weights, wherein the aqueous pigment composition has a total solids content of from 50 to 85 wt%, based on the total weight of the aqueous pigment composition.

Still another aspect of the present invention relates to the use of the inventive aqueous pigment composition in paints or coatings.

Still another aspect of the present invention relates to the use of the inventive aqueous pigment as titanium dioxide enhancer.

Still another aspect of the present invention relates to a paint or coating comprising the aqueous pigment composition.

The following terms used throughout the present application shall have the meanings set forth hereinafter:

The term "ground natural calcium carbonate" (GNCC) as used herein refers to a particulate material obtained from natural calcium carbonate-containing minerals (e.g. chalk, limestone, marble or dolomite) which has been processed in a wet and/or dry comminution step, such as crushing and/or grinding, and optionally has been subjected to further steps such as screening and/or fractionation, for example, by a cyclone or classifier.

A "precipitated calcium carbonate" (PCC) in the meaning of the present invention is a synthesized material, generally obtained by precipitation following a reaction of carbon dioxide and calcium hydroxide (hydrated lime) in an aqueous environment or by precipitation of a calcium- and a carbonate source in water. Additionally, precipitated calcium carbonate can also be the product of introducing calcium- and carbonate salts, for example calcium chloride and sodium carbonate, in an aqueous environment. PCC may have a vateritic, calcitic or aragonitic crystalline form. PCCs are described, for example, in EP 2 447 213 A1, EP 2 524 898 A1, EP 2 371 766 A1, EP 2 840 065 A1, or WO 2013/142473 A1.

A "surface modified calcium carbonate" according to the present invention is a reaction product of ground natural calcium carbonate (GNCC) and/or precipitated calcium carbonate (PCC) treated with $CO_2$ and one or more $H_3O^+$ ion donors, wherein the $CO_2$ is formed in situ by the $H_3O^+$ ion donors treatment and/or is supplied from an external source. A $H_3O^+$ ion donor in the context of the present invention is a Brønsted acid and/or an acid salt.

The term "particulate" in the meaning of the present application refers to materials composed of a plurality of particles. Said plurality of particles may be defined, for example, by its particle size distribution ($d_{98}$, $d_{50}$ etc.).

The "particle size" of surface modified calcium carbonate herein is described as volume-based particle size distribution $d_x$. Therein, the value $d_x$ represents the diameter relative to which $x$ % by volume of the particles have diameters less than $d_x$. This means that, for example, the $d_{20}$ value is the particle size at which 20 vol% of all particles are smaller than that particle size. The $d_{50}$ value is thus the volume median particle size, i.e. 50 vol% of all particles are smaller than that particle size and the $d_{98}$ value, referred to as volume topcut, is the particle size at which 98 vol% of all particles are smaller than that particle size.

The "particle size" of particulate materials other than surface modified calcium carbonate (e.g. ground natural calcium carbonate) herein is described by a weight-based distribution of particle sizes $d_x$. Therein, the value $d_x$ represents the diameter relative to which $x$ % by weight of the particles have diameters less than $d_x$. This means that, for example, the $d_{20}$ value is the particle size at which 20 wt% of all particles are smaller than that particle size. The $d_{50}$ value is thus the weight median particle size, i.e. 50 wt% of all particles are smaller than that particle size and the $d_{98}$ value, referred to as weight topcut, is the particle size at which 98 wt% of all particles are smaller than that particle size.

Throughout the present document, the "specific surface area" (in $m^2/g$) of surface modified calcium carbonate or other materials is determined using the BET method (using nitrogen as adsorbing gas).

For the purpose of the present invention, the "porosity" or "pore volume" refers to the intra-particle intruded specific pore volume.

In the context of the present invention, the term "pore" is to be understood as describing the space that is found between and/or within particles, i.e. that is formed by the particles as they pack together under nearest neighbour contact (interparticle pores), such as in a powder or a compact and/or the void space within porous particles (intraparticle pores), and that allows the passage of liquids under pressure when saturated by the liquid and/or supports absorption of surface wetting liquids.

A "suspension" or "slurry" in the meaning of the present invention refers to a mixture comprising at least one insoluble solid in a liquid medium, for example water, and optionally further additives, and usually contains large amounts of solids and, thus, is more viscous (higher viscosity) and can have a higher density than the liquid medium from which it is formed.

For the purpose of the present invention, the term "viscosity" refers to the Brookfield viscosity.

"Water-insoluble" materials are defined as materials which, when 100 g of said material is mixed with 100 g deionized water and filtered on a filter having a 0.2 $\mu$m pore size at 20 °C under atmospheric pressure to recover the liquid filtrate, provide less than or equal to 1 g of recovered solid material following evaporation at 95 to 100 °C of 100 g of said liquid filtrate at ambient pressure. "Water-soluble" materials are thus defined as materials which, when 100 g of said material is mixed with 100 g deionized water and filtered on a filter having a 0.2 $\mu$m pore size at 20 °C under atmospheric pressure to recover the liquid filtrate, provide more than 1 g of recovered solid material following evaporation at 95 to 100 °C of 100 g of said liquid filtrate at ambient pressure.

The term "solid" according to the present invention refers to a material that is solid under standard ambient temperature and pressure (SATP) which refers to a temperature of 298.15 K (25 °C) and an absolute pressure of exactly 1 bar. The solid may be in the form of a powder, tablet, granules, flakes etc. Accordingly, the term "liquid medium" refers to a material that is liquid under standard ambient temperature and pressure (SATP) which refers to a temperature of 298.15 K (25 °C) and an absolute pressure of exactly 1 bar.

A "titanium dioxide enhancer" in the meaning of the present invention is a pigment which, when used together with a titanium dioxide pigment, is capable of improving the optical properties of titanium dioxide. Preferably, the aforementioned improved optical properties include opacity, contrast ratio, matting properties or any combinations thereof.

Where an indefinite or definite article is used when referring to a singular noun, e.g. "a", "an" or "the", this includes a plural of that noun unless anything else is specifically stated.

Where the term "comprising" is used in the present description and claims, it does not exclude other elements. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Terms like "obtainable" or "definable" and "obtained" or "defined" are used interchangeably. This, for example, means that, unless the context clearly dictates otherwise, the term "obtained" does not mean to indicate that, for example, an embodiment must be obtained by, for example, the sequence of steps following the term "obtained" though such a limited understanding is always included by the terms "obtained" or "defined" as a preferred embodiment.

Whenever the terms "including" or "having" are used, these terms are meant to be equivalent to "comprising" as defined hereinabove.

In the following, preferred embodiments of the aqueous pigment composition according to the present invention will be described. It is to be understood that these details and embodiments also apply to the process for preparing the inventive composition and its use as titanium dioxide enhancer, and its use in paints and coatings.

In a first embodiment of the present invention, the ground natural calcium carbonate (GNCC) of the pigment composition has:

(i) a weight median particle diameter $d_{50}$ in the range of from 0.05 to 1.5 $\mu$m, preferably from 0.1 to 1.3 $\mu$m, more preferably from 0.2 to 1 $\mu$m, and most preferably from 0.5 to 0.9 $\mu$m;
(ii) a weight-based particle diameter $d_{98}$ in the range of from 3 to 5 $\mu$m, preferably from 3.2 to 4.8 $\mu$m, more preferably from 3.5 to 4.5 $\mu$m, and most preferably from 3.8 to 4.2 $\mu$m; and/or
(iii) a weight-based particle diameter ratio $d_{98}/d_{50}$ of 3 or higher, preferably 4 or higher, and most preferably in the range of from 4.5 to 6.5.

In another embodiment of the present invention, the surface modified calcium carbonate (MCC) of the pigment composition has:

(i) a volume median particle diameter $d_{50}$ in the range of from 0.05 to 1.3 $\mu$m, preferably from 0.1 to 1 $\mu$m, more preferably from 0.2 to 0.9 $\mu$m, and most preferably from 0.3 to 0.7 $\mu$m;
(ii) a volume-based particle diameter $d_{98}$ in the range of from 3 to 10 $\mu$m, preferably from 3.5 to 8 $\mu$m, more preferably from 4 to 6 $\mu$m, and most preferably from 4.5 to 5.5 $\mu$m; and/or
(iii) a volume-based particle diameter ratio $d_{98}/d_{50}$ of 10 or less, preferably 6 or less, and most preferably in the range of from 3.5 to 5.5.

In still another embodiment of the present invention, the surface modified calcium carbonate (MCC) of the pigment composition has a specific surface area in the range of from 20 to 200 $m^2$/g, preferably from 25 to 100 $m^2$/g, and most preferably from 30 to 50 $m^2$/g, measured using nitrogen and the BET method according to ISO 9277:2010.

In still another embodiment of the present invention, the surface modified calcium carbonate (MCC) of the pigment composition has an intra-particle intruded specific pore volume in the range of from 0.08 to 1.80 $cm^3$/g, preferably from 0.10 to 1.50 $cm^3$/g, and most preferably from 0.18 to 1.30 $cm^3$/g, calculated from mercury porosimetry measurement.

In another embodiment of the present invention, the ground natural calcium carbonate (GNCC) and the surface modified calcium carbonate (MCC) are present in the inventive aqueous pigment composition at a ratio of from 90:10 to 30:70, and preferably from 88:12 to 60:40, for example at a ratio of 85:15, each based on dry weights.

In another embodiment of the present invention, the inventive aqueous pigment composition has a total solids content of from 55 to 80 wt%, preferably from 60 to 78 wt%, and most preferably from 65 to 75 wt%, each based on the total weight of the aqueous pigment composition.

In one embodiment, the ground natural calcium carbonate (GNCC) of step (a) of the inventive process has:

(i) a weight median particle diameter $d_{50}$ in the range of from 0.05 to 1.5 $\mu$m, preferably from 0.1 to 1.3 $\mu$m, more preferably from 0.2 to 1 $\mu$m, and most preferably from 0.5 to 0.9 $\mu$m;
(ii) a weight-based particle diameter $d_{98}$ in the range of from 3 to 5 $\mu$m, preferably from 3.2 to 4.8 $\mu$m, more preferably from 3.5 to 4.5 $\mu$m, and most preferably from 3.8 to 4.2 $\mu$m; and/or
(iii) a weight-based particle diameter ratio $d_{98}/d_{50}$ of 3 or higher, preferably 4 or higher, and most preferably in the range of from 4.5 to 6.5.

In another embodiment, the surface modified calcium carbonate (MCC) of step (b) of the inventive process has:

(i) a volume median particle diameter $d_{50}$ in the range of from 0.05 to 1.3 $\mu$m, preferably from 0.1 to 1 $\mu$m, more preferably from 0.2 to 0.9 $\mu$m, and most preferably from 0.3 to 0.7 $\mu$m;
(ii) a volume-based particle diameter $d_{98}$ in the range of from 3 to 10 $\mu$m, preferably from 3.5 to 8 $\mu$m, more preferably from 4 to 6 $\mu$m, and most preferably from 4.5 to 5.5 $\mu$m; and/or
(iii) a volume-based particle diameter ratio $d_{98}/d_{50}$ of 10 or less, preferably 6 or less, and most preferably in the range of from 3.5 to 5.5.

In still another embodiment, the surface modified calcium carbonate (MCC) of step (b) of the inventive process has a specific surface area in the range of from 20 to 200 m$^2$/g, preferably from 25 to 100 m$^2$/g, and most preferably from 30 to 50 m$^2$/g, measured using nitrogen and the BET method according to ISO 9277:2010.

In still another embodiment, the surface modified calcium carbonate (MCC) of step (b) of the inventive process has an intra-particle intruded specific pore volume in the range of from 0.08 to 1.80 cm$^3$/g, preferably from 0.10 to 1.50 cm$^3$/g, and most preferably from 0.18 to 1.30 cm$^3$/g, calculated from mercury porosimetry measurement.

In another embodiment, the ground natural calcium carbonate (GNCC) and the surface modified calcium carbonate (MCC) are present in the aqueous pigment composition of the inventive process at a ratio of from 90:10 to 30:70, preferably from 88:12 to 60:40, for example at a ratio of 85:15, each based on dry weights.

In still another embodiment, the aqueous pigment composition of the inventive process has a total solids content of from 55 to 80 wt%, preferably from 60 to 78 wt%, and most preferably from 65 to 75 wt%, each based on the total weight of the aqueous pigment composition.

## (A) Ground natural calcium carbonate (GNCC)

The aqueous pigment composition of the present invention comprises ground natural calcium carbonate (GNCC) which may be obtained, for example, in a wet and/or dry comminution step, such as crushing and/or grinding, from natural calcium carbonate-containing minerals (e.g. chalk, limestone, marble or dolomite).

In one embodiment of the present invention, the ground natural calcium carbonate (GNCC) is a ground calcium carbonate-containing mineral, preferably the calcium carbonate-containing mineral is selected from the group consisting of chalk, limestone, marble, dolomite and mixtures thereof. More preferably, the calcium carbonate-containing mineral is chalk, limestone or marble, even more preferably limestone or marble, and most preferably marble.

It is appreciated that the ground natural calcium carbonate (GNCC) can be one or a mixture of different kinds of ground natural calcium carbonate(s).

In one embodiment of the present invention, the ground natural calcium carbonate (GNCC) comprises, preferably consists of, one kind of ground natural calcium carbonate. Alternatively, the ground natural calcium carbonate (GNCC) comprises, preferably consists of, two or more kinds of ground natural calcium carbonates. For example, the ground natural calcium carbonate (GNCC) comprises, preferably consists of, two or three kinds of ground natural calcium carbonates. Preferably, the surface modified calcium carbonate comprises, more preferably consists of, one kind of ground natural calcium carbonate.

The ground natural calcium carbonate (GNCC) used in the pigment composition of the present invention has a specific particle size distribution, wherein the weight median particle diameter $d_{50}$ is 1.5 $\mu$m or less and the weight-based particle diameter $d_{98}$ is 5 $\mu$m or less. The ground natural calcium carbonate (GNCC) used in the inventive pigment composition may also be referred to as ultrafine ground natural calcium carbonate (UF-GNCC).

In general, ground natural calcium carbonate (GNCC) having a weight median particle diameter $d_{50}$ of 1.5 $\mu$m or less and a weight-based particle diameter $d_{98}$ of 5 $\mu$m or less as used in the present invention may be obtained by any suitable grinding method known in the art, wherein dry grinding, wet grinding or both, a combination of wet grinding and dry grinding steps may be used.

According to one embodiment, the ground natural calcium carbonate (GNCC) is a wet-ground natural calcium carbonate. In another embodiment, the ground natural calcium carbonate (GNCC) is a dry-ground natural calcium carbonate.

The grinding step can be carried out with any conventional grinding device, for example, under conditions such that refinement predominantly results from impacts with a secondary body, i.e. in one or more of a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. The grinding step may also be performed under conditions such that autogenous grinding takes place and/or by horizontal ball milling, and/or other such processes known to the skilled man.

In one embodiment, grinding is carried out in a vertical or horizontal ball mill, preferably in a vertical ball mill. Such vertical and horizontal ball mills usually consist of a vertically or horizontally arranged, cylindrical grinding chamber comprising an axially fast rotating agitator shaft being equipped with a plurality of paddles and/or stirring discs, such as described for example in EP 0 607 840 A1.

It is to be noted that grinding of the calcium carbonate-containing mineral may be carried out by using at least one of the aforementioned grinding methods or devices. However, it is also possible to use a combination of any of the foregoing methods or a series of any of the aforementioned grinding devices.

Subsequent to the grinding step, the ground calcium carbonate-containing mineral may, optionally, be divided into two or more fractions, each having different particle distributions, by use of a classifying step. A classifying step in general serves to divide a feed fraction having a certain particle size distribution into a coarse fraction, which may be subjected to another grinding cycle, and a fine fraction, which may be used as the final product. For this purpose, screening devices as well as gravity-based devices, such as centrifuges or cyclones (e.g. hydrocyclones) and any combination of the aforementioned devices may be used.

As already indicated above, the ground natural calcium carbonate (GNCC) used in the pigment composition of the present invention is an ultrafine ground natural calcium carbonate (UF-GNCC) having a weight median particle diameter $d_{50}$ of 1.5 $\mu$m or less and a weight-based particle diameter $d_{98}$ of 5 $\mu$m or less.

The particle size distribution of the ground natural calcium carbonate (GNCC), defined in terms of a specific weight-based $d_{50}$ (median particle size) or $d_{98}$ (topcut), may have an influence on the desired optical properties of the inventive pigment composition and paints or coatings prepared thereof, for example in terms of opacity, contrast ratio, yellowness or matting properties. The particle size distribution may also have an influence one the viscosity of the inventive pigment composition, which is an aqueous composition.

In some embodiments of the present invention, the ground natural calcium carbonate (GNCC) may thus have a weight median particle diameter $d_{50}$ in the range of from 0.05 to 1.5 $\mu$m, preferably from 0.1 to 1.3 $\mu$m, more preferably from 0.2 to 1 $\mu$m, and most preferably from 0.5 to 0.9 $\mu$m

Additionally or alternatively, the ground natural calcium carbonate (GNCC) may have a weight-based particle diameter $d_{98}$ in the range of from 3 to 5 $\mu$m, preferably from 3.2 to 4.8 $\mu$m, more preferably from 3.5 to 4.5 $\mu$m, and most preferably from 3.8 to 4.2 $\mu$m.

As indicated above, both $d_{50}$ and $d_{98}$ may influence the desired optical properties of the inventive pigment composition, paints or coatings prepared thereof, or the viscosity of the inventive pigment composition. It may therefore be appropriate, additionally or alternatively, to define the particle size distribution of the ground natural calcium carbonate (GNCC) in terms of a weight-based particle diameter ratio $d_{98}/d_{50}$. Said ratio is indicative for the steepness of the particle size distribution meaning that, for example, a high value represents a broad distribution curve.

Therefore, in some embodiments, the ground natural calcium carbonate (GNCC) may have a weight-based particle diameter ratio $d_{98}/d_{50}$ of 3 or higher, preferably 4 or higher, and most preferably in the range of from 4.5 to 6.

Additionally or alternatively, the ground natural calcium carbonate (GNCC) may be characterized by its specific surface area which may also have an influence on the desired optical properties. Therefore, in one embodiment, the ground natural calcium carbonate (GNCC) has a specific surface area of from 1 to 75 $m^2/g$, preferably from 2 to 50 $m^2/g$, more preferably from 5 to 25 $m^2/g$, even more preferably from 8 to 20 $m^2/g$, and most preferably from 9 to 15 $m^2/g$, measured using nitrogen and the BET method according to ISO 9277:2010.

Optionally, the ground natural calcium carbonate (GNCC) used in the inventive aqueous pigment composition may be surface-treated with any suitable hydrophobizing agent known to the skilled person, for example fatty acids having from 6 to 24 chain carbon atoms such as stearic acid. However, in a preferred embodiment, the ground natural calcium carbonate (GNCC) is untreated.

Where the ground natural calcium carbonate (GNCC, more precisely UF-GNCC) is used in the form of an aqueous suspension or slurry, said suspension or slurry may optionally be stabilized by a dispersant. Conventional dispersants known to the skilled person can be used. A preferred dispersant is comprised of polyacrylic acids and/or carboxymethylcelluloses. In one embodiment, the dispersant is a polyacrylate-based dispersant, including partially or fully neutralized polyacrylates.

**(B) Surface modified calcium carbonate**

The aqueous pigment composition of the present invention further comprises surface modified calcium carbonate (MCC). Surface modified calcium carbonate may also be referred to as functionalized calcium carbonate (FCC) or surface-reacted calcium carbonate (SRCC).

It is appreciated that the surface modified calcium carbonate (MCC) can be one or a mixture of different kinds of surface modified calcium carbonate(s). In one embodiment of the present invention, the surface modified calcium carbonate (MCC) comprises, preferably consists of, one kind of surface modified calcium carbonate. Alternatively, the surface modified calcium carbonate (MCC) comprises, preferably consists of, two or more kinds of surface modified calcium carbonates. For example, the surface modified calcium carbonate (MCC) comprises, preferably consists of, two or three kinds of surface modified calcium carbonates. Preferably, the surface modified calcium carbonate (MCC) comprises, more preferably consists of, one kind of surface modified calcium carbonate.

The surface modified calcium carbonate (MCC) is a reaction product of ground natural calcium carbonate (GNCC) and/or precipitated calcium carbonate (PCC) treated with $CO_2$ and one or more $H_3O^+$ ion donors, wherein the $CO_2$ is formed in situ by the $H_3O^+$ ion donors treatment and/or is supplied from an external source. Because of the reaction of ground natural calcium carbonate or precipitated calcium carbonate with $CO_2$ and the one or more $H_3O^+$ ion donors, surface modified calcium carbonate may comprise GNCC or PCC and at least one water-insoluble calcium salt.

In a preferred embodiment of the present invention, said surface modified calcium carbonate (MCC) comprises ground natural calcium carbonate (GNCC) and/or precipitated calcium carbonate (PCC) and at least one water-insoluble calcium salt which is present on at least part of the surface of said GNCC and/or PCC. More preferably, said surface modified calcium carbonate (MCC) comprises a total amount of ground natural calcium carbonate (GNCC) and/or precipitated calcium carbonate (PCC) in the range of from 1 to 50 wt%, based on the total dry weight of the surface modified calcium carbonate (MCC).

An $H_3O^+$ ion donor in the context of the present invention is a Brønsted acid and/or an acid salt.

In a preferred embodiment of the invention, the surface modified calcium carbonate (MCC) is obtained by a process comprising the steps of:

(a) providing a suspension of ground natural calcium carbonate (GNCC) or precipitated calcium carbonate (PCC);
(b) adding at least one acid having a $pK_a$ value of 0 or less at 20 °C, or having a $pK_a$ value from 0 to 2.5 at 20 °C to the suspension provided in step (a); and
(c) treating the suspension provided in step (a) with $CO_2$ before, during or after step (b).

According to another embodiment, the surface modified calcium carbonate (MCC) is obtained by a process comprising the steps of:

(a) providing a ground natural calcium carbonate (GNCC) or precipitated calcium carbonate (PCC);
(b) providing at least one water-soluble acid;
(c) providing gaseous $CO_2$; and
(d) contacting said GNCC or PCC provided in step (a), the at least one acid provided in step (b) and the gaseous $CO_2$ provided in step (c);

characterized in that

(i) the at least one acid provided in step (b) has a $pK_a$ of greater than 2.5 and less than or equal to 7 at 20 °C, associated with the ionisation of its first available hydrogen, and a corresponding anion is formed on loss of this first available hydrogen capable of forming a water-soluble calcium salt; and
(ii) following contacting the at least one water-soluble acid provided in step (b) and the GNCC or PCC provided in step (a), at least one water-soluble salt, which in the case of a hydrogen-containing salt has a $pK_a$ of greater than 7 at 20 °C, associated with the ionisation of the first available hydrogen, and the salt anion of which is capable of forming water-insoluble calcium salts, is additionally provided.

The source of calcium carbonate, e.g. ground natural calcium carbonate (GNCC), preferably is selected from calcium carbonate-containing minerals selected from the group comprising marble, chalk, limestone and mixtures thereof. Natural calcium carbonate may comprise further naturally occurring components such as magnesium carbonate, alumino silicate etc. According to one embodiment, natural calcium carbonate, such as GNCC, comprises aragonitic, vateritic or calcitic mineralogical crystal forms of calcium carbonate or mixtures thereof.

In general, the grinding of ground natural calcium carbonate may be performed in a dry or wet grinding process and may be carried out with any conventional grinding device, for example, under conditions such that comminution predominantly results from impacts with a secondary body, i.e. in one or more of a ball mill, a rod mill, a vibrating mill, a roll crusher, a centrifugal impact mill, a vertical bead mill, an attrition mill, a pin mill, a hammer mill, a pulverizer, a shredder, a de-clumper, a knife cutter, or other such equipment known to the skilled person. In case the ground natural calcium carbonate comprises wet ground calcium carbonate, the grinding step may be performed under conditions such that autogenous grinding takes place and/or by horizontal ball milling, and/or other such processes known to the skilled person. The wet processed ground natural calcium carbonate thus obtained may be washed and dewatered by well-known processes, e.g. by flocculation, filtration or forced evaporation prior to drying. The subsequent step of drying (if necessary) may be carried out in a single step such as spray drying, or in at least two steps. It is also common that such a mineral material undergoes a beneficiation step (such as a flotation, bleaching or magnetic separation step) to remove impurities.

As already indicated hereinabove, a precipitated calcium carbonate (PCC) in the meaning of the present invention is a synthesized material, generally obtained by precipitation following a reaction of $CO_2$ and calcium hydroxide in an aqueous environment or by precipitation of calcium and carbonate ions, for example $CaCl_2$ and $Na_2CO_3$, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained aqueous PCC slurry can be mechanically dewatered and dried.

According to one embodiment of the present invention, the precipitated calcium carbonate comprises aragonitic, vateritic or calcitic mineralogical crystal forms of calcium carbonate or mixtures thereof.

Precipitated calcium carbonate may be ground prior to the treatment with $CO_2$ and at least one $H_3O^+$ ion donor by the same means as used for grinding natural calcium carbonate and described above.

According to one embodiment of the present invention, the natural or precipitated calcium carbonate used for preparing the surface modified calcium carbonate (MCC) is in form of particles having a weight median particle size $d_{50}$ of from 0.05 to 10.0 $\mu$m, preferably from 0.2 to 5.0 $\mu$m, more preferably from 0.4 to 3.0 $\mu$m, most preferably from 0.6 to 1.2 $\mu$m, and especially 0.7 $\mu$m. According to a further embodiment of the present invention, the natural or precipitated calcium carbonate is in form of particles having a weight-based topcut particle size $d_{98}$ of from 0.15 to 55 $\mu$m, preferably from 1 to 40 $\mu$m, more preferably from 2 to 25 $\mu$m, most preferably from 3 to 15 $\mu$m, and especially 4 $\mu$m.

The natural or precipitated calcium carbonate for preparing the surface modified calcium carbonate (MCC) may be used dry or suspended in water. Preferably, a corresponding aqueous slurry has a content of natural or precipitated calcium carbonate within the range of from 1 to 90 wt%, more preferably from 3 to 60 wt%, even more preferably from 5 to 40 wt%, and most preferably from 10 to 25 wt%, based on the total weight of said slurry.

The one or more $H_3O^+$ ion donor used for the preparation of surface modified calcium carbonate may be any strong acid, medium-strong acid, or weak acid, or mixtures thereof, generating $H_3O^+$ ions under the preparation conditions. According to the present invention, the at least one $H_3O^+$ ion donor can also be an acid salt, generating $H_3O^+$ ions under the preparation conditions.

According to one embodiment, the at least one $H_3O^+$ ion donor is a strong acid having a $pK_a$ of 0 or less at 20 °C.

According to another embodiment, the at least one $H_3O^+$ ion donor is a medium-strong acid having a $pK_a$ value from 0 to 2.5 at 20 °C. If the $pK_a$ at 20 °C is 0 or less, the acid is preferably selected from sulphuric acid, hydrochloric acid, or mixtures thereof. If the $pK_a$ at 20 °C is from 0 to 2.5, the $H_3O^+$ ion donor is preferably selected from $H_2SO_3$, $H_3PO_4$, oxalic acid, or mixtures thereof. The at least one $H_3O^+$ ion donor can also be an acid salt, for example, $HSO_4^-$ or $H_2PO_4^-$, being at least partially neutralized by a corresponding cation such as $Li^+$, $Na^+$ or $K^+$, or $HPO_4^{2-}$, being at least partially neutralized by a corresponding cation such as $Li^+$, $Na^+$, $K^+$, $Mg^{2+}$ or $Ca^{2+}$. The at least one $H_3O^+$ ion donor can also be a mixture of one or more acids and one or more acid salts.

According to still another embodiment, the at least one $H_3O^+$ ion donor is a weak acid having a $pK_a$ value of greater than 2.5 and less than or equal to 7, when measured at 20 °C, associated with the ionisation of the first available hydrogen, and having a corresponding anion, which is capable of forming water-soluble calcium salts. Subsequently, at least one water-soluble salt, which in the case of a hydrogen-containing salt has a $pK_a$ of greater than 7, when measured at 20 °C, associated with the ionisation of the first available hydrogen, and the salt anion of which is capable of forming water-insoluble calcium salts, is additionally provided. According to a more preferred embodiment, the weak acid has a $pK_a$ value from greater than 2.5 to 5 at 20 °C, and more preferably the weak acid is selected from the group consisting of acetic acid, formic acid, propanoic acid and mixtures thereof. Exemplary cations of said water-soluble salt are selected from the group consisting of potassium, sodium, lithium and mixtures thereof. In a more preferred embodiment, said cation is sodium or potassium. Exemplary anions of said water-soluble salt are selected from the group consisting of phosphate, dihydrogen phosphate, monohydrogen phosphate, oxalate, silicate, mixtures thereof and hydrates thereof. In a more preferred embodiment, said anion is selected from the group consisting of phosphate, dihydrogen phosphate, monohydrogen phosphate, mixtures thereof and hydrates thereof. In a most preferred embodiment, said anion is selected from the group consisting of dihydrogen phosphate, monohydrogen phosphate, mixtures thereof and hydrates thereof. Water-soluble salt addition may be performed dropwise or in one step. In the case of dropwise addition, this addition preferably takes place within a time period of 10 min. It is more preferred to add said salt in one step.

According to one embodiment of the present invention, the at least one $H_3O^+$ ion donor is selected from the group consisting of hydrochloric acid, sulphuric acid, sulphurous acid, phosphoric acid, citric acid, oxalic acid, acetic acid, formic acid and mixtures thereof. Preferably the at least one $H_3O^+$ ion donor is selected from the group consisting of hydrochloric acid, sulphuric acid, sulphurous acid, phosphoric acid, oxalic acid, $H_2PO_4^-$, being at least partially neutralized by a corresponding cation such as $Li^+$, $Na^+$ or $K^+$, $HPO_4^{2-}$, being at least partially neutralized by a corresponding cation such as $Li^+$, $Na^+$, $K^+$, $Mg^{2+}$ or $Ca^{2+}$ and mixtures thereof, more preferably the at least one acid is selected from the group consisting of hydrochloric acid, sulphuric acid, sulphurous acid, phosphoric acid, oxalic acid, or mixtures thereof. A particularly preferred $H_3O^+$ ion donor is phosphoric acid.

The one or more $H_3O^+$ ion donor can be added to the suspension as a concentrated solution or a more diluted solution. Preferably, the molar ratio of the $H_3O^+$ ion donor to the natural or precipitated calcium carbonate is from 0.01 to 4, more preferably from 0.02 to 2, even more preferably from 0.05 to 1 and most preferably from 0.1 to 0.58.

In another preferred embodiment, the at least one $H_3O^+$ ion donor is selected from the group consisting of hydrochloric acid, sulphuric acid, sulphurous acid, phosphoric acid, citric acid, oxalic acid, acetic acid, formic acid and mixtures thereof, wherein the molar ratio of the $H_3O^+$ ion donor to the natural or precipitated calcium carbonate is from 0.01 to 4, more preferably from 0.02 to 2, even more preferably from 0.05 to 1 and most preferably from 0.1 to 0.58.

In a particularly preferred embodiment, the at least one $H_3O^+$ ion donor is a mixture of phosphoric acid and citric acid, more preferably the molar ratio of the $H_3O^+$ ion donor to the natural or precipitated calcium carbonate is from 0.01 to 4, more preferably from 0.02 to 2, even more preferably from 0.05 to 1 and most preferably from 0.1 to 0.58.

As already indicated hereinabove, the treatment of GNCC or PCC with the at least one $H_3O^+$ ion donor and $CO_2$ may lead to the formation of at least one water-insoluble calcium salt. Therefore, surface modified calcium carbonate (MCC) may comprise GNCC and/or PCC and at least one water-insoluble calcium salt other than calcium carbonate. In one embodiment, said at least one water-insoluble calcium salt is present on at least part of the surface of said GNCC or PCC.

The use of phosphoric acid, $H_2PO_4^-$ or $HPO_4^{2-}$ as the $H_3O^+$ ion donor may lead to the formation of hydroxylapatite. Therefore, in a preferred embodiment, the at least one water-insoluble calcium salt is hydroxylapatite.

In a similar manner, the use of other $H_3O^+$ ion donors may lead to the formation of corresponding water-insoluble calcium salts other than calcium carbonate on at least part of the surface of the surface modified calcium carbonate. In one embodiment, the at least one water-insoluble calcium salt is thus selected from the group consisting of octacalcium phosphate, hydroxylapatite, chlorapatite, fluorapatite, carbonate apatite and mixtures thereof.

It is also possible to add the $H_3O^+$ ion donor to the water before the natural or precipitated calcium carbonate is suspended.

In a next step, the natural or precipitated calcium carbonate is treated with $CO_2$. If a strong acid such as sulphuric acid or hydrochloric acid is used for the $H_3O^+$ ion donor treatment of the natural or precipitated calcium carbonate, the $CO_2$ is automatically formed. Alternatively or additionally, the $CO_2$ can be supplied from an external source.

$H_3O^+$ ion donor treatment and treatment with $CO_2$ can be carried out simultaneously which is the case when a strong or medium-strong acid is used. It is also possible to carry out $H_3O^+$ ion donor treatment first, e.g. with a medium strong acid having a $pK_a$ in the range of 0 to 2.5 at 20 °C, wherein $CO_2$ is formed in situ, and thus, the $CO_2$ treatment will automatically be carried out simultaneously with the $H_3O^+$ ion donor treatment, followed by the additional treatment with $CO_2$ supplied from an external source.

Preferably, the concentration of gaseous $CO_2$ in the suspension is, in terms of volume, such that the ratio (volume of suspension): (volume of gaseous $CO_2$) is from 1:0.05 to 1:20, even more preferably 1:0.05 to 1:5.

In a preferred embodiment, the $H_3O^+$ ion donor treatment step and/or the $CO_2$ treatment step are repeated at least once, more preferably several times. According to one embodiment, the at least one $H_3O^+$ ion donor is added over a time period of at least about 5 min, preferably at least about 10 min, typically from about 10 to about 20 min, more preferably about 30 min, even more preferably about 45 min, and sometimes about 1 h or more.

Subsequent to the $H_3O^+$ ion donor treatment and $CO_2$ treatment, the pH of the aqueous suspension, measured at 20 °C, naturally reaches a value of greater than 6.0, preferably greater than 6.5, more preferably greater than 7.0, even more preferably greater than 7.5, thereby preparing the surface modified natural or precipitated calcium carbonate as an aqueous suspension having a pH of greater than 6.0, preferably greater than 6.5, more preferably greater than 7.0, even more preferably greater than 7.5.

Further details on the preparation of surface modified natural calcium carbonate are disclosed in WO 00/39222 A1, WO 2004/083316 A1, WO 2005/121257 A2, WO 2009/074492 A1, EP 2 264 108 A1, EP 2 264 109 A1 and US 2004/0020410 A1, the content of these references herewith being included in the present application.

Similarly, surface reacted precipitated calcium carbonate may be obtained. As can be taken in detail from WO 2009/074492 A1, surface reacted precipitated calcium carbonate is obtained by contacting precipitated calcium carbonate with $H_3O^+$ ions and with anions being solubilized in an aqueous medium and being capable of forming water-insoluble calcium salts, in an aqueous medium to form a slurry of surface reacted precipitated calcium carbonate, wherein said surface reacted precipitated calcium carbonate comprises an insoluble, at least partially crystalline calcium salt of said anion formed on the surface of at least part of the precipitated calcium carbonate.

Said solubilized calcium ions correspond to an excess of solubilized calcium ions relative to the solubilized calcium ions naturally generated on dissolution of precipitated calcium carbonate by $H_3O^+$ ions, where said $H_3O^+$ ions are provided solely in the form of a counter ion to the anion, i.e. via the addition of the anion in the form of an acid or non-calcium acid salt, and in absence of any further calcium ion or calcium ion generating source.

Said excess solubilized calcium ions are preferably provided by the addition of a soluble neutral or acid calcium salt, or by the addition of an acid or a neutral or acid non-calcium salt which generates a soluble neutral or acid calcium salt in situ.

Said $H_3O^+$ ions may be provided by the addition of an acid or an acid salt of said anion, or the addition of an acid or an acid salt which simultaneously serves to provide all or part of said excess solubilized calcium ions.

In a further preferred embodiment of the preparation of the surface reacted natural or precipitated calcium carbonate, the natural or precipitated calcium carbonate is reacted with the acid and/or the $CO_2$ in the presence of at least one compound selected from the group consisting of silicate, silica, aluminium hydroxide, earth alkali aluminate such as sodium or potassium aluminate, magnesium oxide, aluminium sulphate or mixtures thereof. Preferably, the at least one silicate is selected from an aluminium silicate, a calcium silicate, or an earth alkali metal silicate.

In another preferred embodiment, said at least one compound is aluminium sulphate hexadecahydrate. In a particularly preferred embodiment, said at least one compound is aluminium sulphate hexadecahydrate, wherein the at least one $H_3O^+$ ion donor is selected from the group consisting of hydrochloric acid, sulphuric acid, sulphurous acid, phosphoric acid, citric acid, oxalic acid, acetic acid, formic acid and mixtures thereof, more preferably the molar ratio of said $H_3O^+$ ion donor to the natural or precipitated calcium carbonate is from 0.01 to 4, more preferably from 0.02 to 2, even more preferably from 0.05 to 1 and most preferably from 0.1 to 0.58.

The foregoing components can be added to an aqueous suspension comprising the natural or precipitated calcium carbonate before adding the acid and/or $CO_2$.

Alternatively, the foregoing components can be added to the aqueous suspension of natural or precipitated calcium carbonate while the reaction of natural or precipitated calcium carbonate with an acid and $CO_2$ has already started. Further details about the preparation of the surface reacted natural or precipitated calcium carbonate in the presence of at least one silicate and/or silica and/or aluminium hydroxide and/or earth alkali aluminate component(s) are disclosed in WO 2004/083316 A1, the content of this reference herewith being included in the present application.

The surface modified calcium carbonate can be kept in suspension, optionally further stabilized by a dispersant. Conventional dispersants known to the skilled person can be used. A preferred dispersant is comprised of polyacrylic acids and/or carboxymethylcelluloses. In one embodiment, the dispersant is a polyacrylate-based dispersant, including partially or fully neutralized polyacrylates.

Alternatively, the aqueous suspension described above can be dried, thereby obtaining the solid (i.e. dry or containing as little water that it is not in a fluid form) surface reacted natural or precipitated calcium carbonate in the form of granules or a powder.

In a preferred embodiment, the surface modified calcium carbonate (MCC) has a specific surface area of from 20 to 200 $m^2/g$, preferably from 25 to 100 $m^2/g$, and most preferably from 30 to 50 $m^2/g$, measured using nitrogen and the BET method according to ISO 9277:2010. In a further embodiment, the surface modified calcium carbonate (MCC) has a specific surface area of 120 $m^2/g$ or less, more preferably from 60 to 120 $m^2/g$, and most preferably from 70 to 105 $m^2/g$, measured using nitrogen and the BET method according to ISO 9277:2010. For example, the surface modified calcium carbonate (MCC) may have a specific surface area of from 75 to 100 $m^2/g$, measured using nitrogen and the BET method according to ISO 9277:2010.

As in case of the ground natural calcium carbonate (GNCC), also the particle size distribution of the surface modified calcium carbonate (MCC), defined in terms of a specific volume-based $d_{50}$ (median particle size) or $d_{98}$ (topcut), may have an influence on the desired optical properties of the inventive pigment composition and paints or coatings prepared thereof, for example in terms of opacity, contrast ratio, yellowness or matting properties. The particle size distribution may also have an influence one the viscosity of the inventive pigment composition, which is an aqueous composition.

The surface modified calcium carbonate (MCC) is defined by a volume median particle diameter $d_{50}$ of 1.3 $\mu$m or less. In some embodiments of the present invention, the surface modified calcium carbonate (MCC) may have a volume median particle diameter $d_{50}$ in the range of from 0.05 to 1.3 $\mu$m, preferably from 0.1 to 1 $\mu$m, more preferably from 0.2 to 0.9 $\mu$m, and most preferably from 0.3 to 0.7 $\mu$m.

Furthermore, the surface modified calcium carbonate (MCC) is defined by a volume-based particle diameter $d_{98}$ of 10 $\mu$m or less. In some embodiments of the present invention, the surface modified calcium carbonate (MCC) may have a volume-based particle diameter $d_{98}$ in the range of from 3 to 10 $\mu$m, preferably from 3.5 to 8 $\mu$m, more preferably from 4 to 6 $\mu$m, and most preferably from 4.5 to 5.5 $\mu$m.

As indicated above, both $d_{50}$ and $d_{98}$ may influence the desired optical properties of the inventive pigment composition, paints or coatings prepared thereof, or the viscosity of the inventive pigment composition. It may therefore be appropriate, additionally or alternatively, to define the particle size distribution of the surface modified calcium carbonate (MCC) in terms of a volume-based particle diameter ratio $d_{98}/d_{50}$. Said ratio is indicative for the steepness of the particle size distribution meaning that, for example, a low value represents a narrow distribution curve.

Therefore, in some embodiments, the surface modified calcium carbonate (MCC) may have a volume-based particle diameter ratio $d_{98}/d_{50}$ of 10 or less, preferably 6 or less, and most preferably in the range of from 3.5 to 5.5.

According to another embodiment, the surface modified calcium carbonate (MCC) used in the present invention has an intra-particle intruded specific pore volume in the range of from 0.08 to 1.80 $cm^3/g$, preferably from 0.10 to 1.50 $cm^3/g$, and most preferably from 0.18 to 1.30 $cm^3/g$, calculated from mercury porosimetry measurement.

The intra-particle pore size of the surface modified calcium carbonate (MCC) preferably is in a range of from 0.03 to 1.3 $\mu$m, more preferably from 0.04 to 1.1 $\mu$m, and most preferably from 0.05 to 1.05 $\mu$m, determined by mercury porosimetry measurement.

## (C) Aqueous pigment composition

The aqueous pigment composition according to the present invention comprises:

(i) ground natural calcium carbonate (GNCC) having a weight median particle diameter $d_{50}$ of 1.5 $\mu$m or less and a weight-based particle diameter $d_{98}$ of 5 $\mu$m or less as disclosed hereinabove; and
(ii) surface modified calcium carbonate (MCC) being a reaction product of ground natural calcium carbonate (GNCC) and/or precipitated calcium carbonate (PCC) treated with $CO_2$ and one or more $H_3O^+$ ion donors, wherein the $CO_2$ is formed in situ by the $H_3O^+$ ion donors treatment and/or is supplied from an external source, said surface modified calcium carbonate (MCC) having a volume median particle diameter $d_{50}$ of 1.3 $\mu$m or less and a volume-based particle diameter $d_{98}$ of 10 $\mu$m or less as disclosed hereinabove.

The ground natural calcium carbonate (GNCC) and the surface modified calcium carbonate (MCC) are present in the aqueous pigment composition at a ratio of from 95:5 to 5:95, based on dry weights. The aforementioned ratio may have an influence on the desired optical properties of the inventive pigment composition and paints or coatings prepared thereof, for example in terms of opacity, contrast ratio, yellowness or matting properties.

The inventors surprisingly found that the aforementioned optical properties may be improved by using the inventive pigment composition, for example in comparison to conventional calcium carbonate pigments. The inventive pigment composition may also be used to enhance the optical properties of other high performance pigments, thereby reducing overall costs for the preparation of paints and coating at equal or improved performance.

In a particularly useful embodiment, the ground natural calcium carbonate (GNCC) and the surface modified calcium carbonate (MCC) are present in the aqueous pigment composition at a ratio of from 90:10 to 30:70, preferably from 88:12 to 60:40, for example at a ratio of 85:15, each based on dry weights. The ratio of ground natural calcium carbonate (GNCC) and the surface modified calcium carbonate (MCC) may be varied within the ranges disclosed herein, thereby ensuring good optical performance and adequate handleability (e.g. in terms of viscosity).

The total solids content of the inventive pigment composition is relatively high and ranges from 50 to 85 wt%, based on the total weight of the composition. The ratio of the ground natural calcium carbonate (GNCC) and the surface modified calcium carbonate (MCC) described herein above ensures good handleability (e.g. in terms of viscosity) within the specified solids content range.

In further embodiments, the aqueous pigment composition has a total solids content of from 55 to 80 wt%, preferably from 60 to 78 wt%, and most preferably from 65 to 75 wt%, each based on the total weight of the aqueous pigment composition.

In view of its good optical properties in combination with its good handleability (e.g. viscosity), the pigment composition of the present invention is particularly suitable for use in paints and coatings.

Therefore, one aspect of the present invention relates to the use of the inventive aqueous pigment composition in paints or coatings and to these paints or coatings as such comprising the inventive aqueous pigment composition. Due to its good optical properties at less costs, another aspect relates to the use of the inventive aqueous pigment composition as titanium dioxide enhancer.

Another aspect of the present invention relates to the use of the inventive aqueous pigment composition obtainable by the process described hereinafter in paints or coatings and to these paints or coatings as such comprising the inventive aqueous pigment composition obtainable by the process described hereinafter. Due to its good optical properties at less costs, another aspect relates to the use of the inventive aqueous pigment composition obtainable by the process described hereinafter as titanium dioxide enhancer.

Still another aspect of the present invention relates to a pigment composition obtainable by drying the inventive aqueous pigment composition or the inventive aqueous pigment composition obtainable by the process described hereinafter.

## (D) Process for preparing the aqueous pigment composition

The present invention further relates to a process for preparing the aqueous pigment composition disclosed hereinabove. The process comprises the steps of:

(a) providing an aqueous suspension of ground natural calcium carbonate (GNCC) having a weight median particle diameter $d_{50}$ of 1.5 $\mu$m or less and a weight-based particle diameter $d_{98}$ of 5 $\mu$m or less;

(b) providing an aqueous suspension of surface modified calcium carbonate (MCC) being a reaction product of ground natural calcium carbonate (GNCC) and/or precipitated calcium carbonate (PCC) treated with $CO_2$ and one or more $H_3O^+$ ion donors, wherein the $CO_2$ is formed in situ by the $H_3O^+$ ion donors treatment and/or is supplied from an external source, said surface modified calcium carbonate (MCC) having a volume median particle diameter $d_{50}$ of 1.3 $\mu$m or less and a volume-based particle diameter $d_{98}$ of 10 $\mu$m or less;

(c) contacting the aqueous suspension provided in step (a) and the aqueous suspension provided in step (b) to obtain an aqueous pigment composition comprising ground natural calcium carbonate (GNCC) and surface modified calcium carbonate (MCC); and

(d) optionally, adjusting the solids content of the aqueous pigment composition of step (c);

characterized in that the ground natural calcium carbonate (GNCC) and the surface modified calcium carbonate (MCC) are present in the aqueous pigment composition at a ratio of from 95:5 to 5:95, based on dry weights, wherein the aqueous pigment composition has a total solids content of from 50 to 85 wt%, based on the total weight of the aqueous pigment composition.

The skilled person will appreciate that the details and embodiments discussed hereinabove with respect to the ground natural calcium carbonate (GNCC), the surface modified calcium carbonate (MCC) and the details and embodiments concerning the aqueous pigment composition as such will apply accordingly to the instant process for preparing the inventive pigment composition.

In a further embodiment, the aqueous suspension of ground natural calcium carbonate (GNCC) provided in step (a) and/or the aqueous suspension of surface modified calcium carbonate (MCC) provided in step (b) of the inventive process has a solids content of at least 5 wt%, preferably from 5 to 85 wt%, more preferably from 10 to 50 wt%, and most preferably from 15 to 35 wt%, based on the total weight of the aqueous suspension.

In still another embodiment of the inventive process, step (d) is a dewatering step. The term "dewatering" in the meaning of the present invention means a reduction of the water content and an increase of the solids content which is obtained by using a thermal and/or mechanical method.

Dewatering step (d) can be carried out by any thermal and/or mechanical method known to the skilled person for reducing the water content of calcium carbonate comprising aqueous slurries. For example, dewatering step (d) can be preferably carried out mechanically or thermally such as by filtration, centrifugation, sedimentation in a settling tank, evaporation etc., preferably by jet or spray drying.

According to another aspect, the present invention is directed to an aqueous pigment composition obtainable by the inventive process comprising steps (a) - (c), or steps (a) - (d).

The process according to the present invention may further comprise an optional drying step (e). In said drying step, the aqueous pigment composition obtained in contacting step (c) or dewatering step (d) is dried to obtain a dried blend of ground natural calcium carbonate (GNCC) and surface modified calcium carbonate (MCC).

According to still another aspect, the present invention is thus directed to an aqueous pigment composition obtainable by the inventive process comprising steps (a) - (c) and (e), or steps (a) - (e).

The drying method applied to obtain said dried blend of ground natural calcium carbonate (GNCC) and surface modified calcium carbonate (MCC) can be any kind of drying method well known to the skilled person.

**Examples**

The scope and interest of the invention may be better understood on basis of the following examples which are intended to illustrate embodiments of the present invention.

**(A) Analytical methods**

All parameters defined throughout the present application and mentioned in the following examples are based on the following measuring methods:

**Particle size distributions**

The particle size of surface modified calcium carbonate (MCC) herein is described as volume-based particle size distribution $d_x$. The volume-based median particle size $d_{50}$ and the volume-based topcut $d_{98}$ were measured using a Malvern Mastersizer 2000 Laser Diffraction System (Malvern Instruments Plc., Great Britain). The raw data obtained by the measurement was analyzed using the Mie theory, with a particle refractive index of 1.57 and an absorption index of 0.005. The methods and instruments are known to the skilled person and are commonly used to determine particle size distributions of fillers and pigments.

The particle size of particulate materials other than surface modified calcium carbonate (e.g. ground natural calcium carbonate, GNCC) is described herein as weight-based particle size distribution $d_x$. The weight determined median particle size $d_{50}$ and topcut $d_{98}$ were measured by the sedimentation method, which is an analysis of sedimentation behaviour in a gravimetric field. The measurement was made with a Sedigraph™ 5120 of Micromeritics Instrument Corporation, USA. The method and the instrument are known to the skilled person and are commonly used to determine particle size distributions of fillers and pigments. The measurement was carried out in an aqueous solution of 0.1 wt% $Na_4P_2O_7$. The samples were dispersed using a high speed stirrer and sonicated.

## BET specific surface area (SSA)

Throughout the present document, the specific surface area (in $m^2/g$) was determined using the BET method (using nitrogen as adsorbing gas), which is well known to the skilled man (ISO 9277:2010). The total surface area (in $m^2$) of the filler material was then obtained by multiplication of the specific surface area and the mass (in g) of the corresponding sample.

## Porosimetry

The specific pore volume is measured using a mercury intrusion porosimetry measurement using a Micromeritics Autopore V 9620 mercury porosimeter having a maximum applied pressure of mercury 414 MPa (60 000 psi), equivalent to a Laplace throat diameter of 0.004 $\mu$m. The equilibration time used at each pressure step is 20 s. The sample material is sealed in a 3 $cm^3$ chamber powder penetrometer for analysis. The data are corrected for mercury compression, penetrometer expansion and sample material elastic compression using the software Pore-Comp (Gane, P.A.C., Kettle, J.P., Matthews, G.P. and Ridgway, C.J., "Void Space Structure of Compressible Polymer Spheres and Consolidated Calcium Carbonate Paper-Coating Formulations", Industrial and Engineering Chemistry Research, 1996, 35(5), 1753 - 1764).

The total pore volume seen in the cumulative intrusion data can be separated into two regions with the intrusion data from 214 $\mu$m down to about 1 to 4 $\mu$m showing the coarse packing of the sample between any agglomerate structures contributing strongly. Below these diameters lies the fine interparticle packing of the particles themselves. If they also have intraparticle pores, then this region appears bimodal, and by taking the specific pore volume intruded by mercury into pores finer than the modal turning point, i.e. finer than the bimodal point of inflection, we thus define the specific intraparticle pore volume. The sum of these three regions gives the total overall pore volume of the powder, but depends strongly on the original sample compaction/settling of the powder at the coarse pore end of the distribution.

By taking the first derivative of the cumulative intrusion curve, the pore size distributions based on equivalent Laplace diameter, inevitably including pore-shielding, are revealed. The differential curves clearly show the coarse agglomerate pore structure region, the interparticle pore region and the intraparticle pore region, if present. Knowing the intraparticle pore diameter range it is possible to subtract the remainder interparticle and interagglomerate pore volume from the total pore volume to deliver the desired pore volume of the internal pores alone in terms of the pore volume per unit mass (specific pore volume). The same principle of subtraction, of course, applies for isolating any of the other pore size regions of interest.

## Brookfield viscosity

The Brookfield viscosity was measured by a Brookfield DV-III Ultra viscometer at 24 °C $\pm$ 3 °C at 100 rpm using an appropriate spindle of the Brookfield RV-spindle set and is specified in mPa·s. Once the spindle has been inserted into the sample, the measurement was started with a constant rotating speed of 100 rpm. The reported Brookfield viscosity values were the values displayed 60 seconds after the start of the measurement. Based on his technical knowledge, the skilled person will select a spindle from the Brookfield RV-spindle set which is suitable for the viscosity range to be measured. For example, for a viscosity range between 200 and 800 mPa·s the spindle number 3 may be used, for a viscosity range between 400 and 1 600 mPa·s the spindle number 4 may be used, for a viscosity range between 800 and 3 200 mPa·s the spindle number 5 may be used, for a viscosity range between 1 000 and 2 000 000 mPa·s the spindle number 6 may be used, and for a viscosity range between 4 000 and 8 000 000 mPa·s the spindle number 7 may be used.

## Solids content

The suspension solids content (also known as "dry weight") was determined using a Moisture Analyser MJ33 (Mettler-Toledo, Switzerland), with the following settings: drying temperature of 150 °C, automatic switch off if the mass does not change more than 1 mg over a period of 30 s, standard drying of 5 g of suspension.

**Rx, Rx and Rz**

The colour values Rx, Ry, Rz indicated in the present application are determined over white and black fields of the Leneta contrast card and are measured with using a Spectraflash SF 450 X spectrophotomer of the company Datacolor, Montreuil, France according to DIN 53 140.

**Contrast ratio**

Contrast ratio values are determined according to ISO 2814 at a spreading rate of $10 \pm 0.5$ m$^2$/l. The contrast ratio is calculated as described by the following equation:

$$\text{Contrast ratio} \ [\%] = \frac{Ry_{(black)}}{Ry_{(white)}} \times 100 \ \%$$

with Ry(black) and Ry(white) being obtained by the measurement of the color values as indicated above.

**Yellowness index**

The yellowness index is measured according to DIN 6167.

**Gloss values**

The Gloss values are measured at the listed angles according to DIN 67 530 on painted surfaces prepared with a coater gap of 150 μm on contrast cards. The contrast cards used are Leneta contrast cards, form 3-B-H, size 7-5/8 × 11-3/8 (194 × 289 mm), sold by the company Leneta, and distributed by Novamart, Stäfa, Switzerland. The gloss is measured with a gloss measurement device from the company Byk Gardner, Geretsried, Germany. The gloss is obtained by measuring 5 Leneta cards (one measurement each) with the gloss measurement device, and the average value is calculated by the device and can be derived from the display of the device.

**(B) Examples**

The following examples are not to be construed to limit the scope of the claims in any manner whatsoever.

**Materials**

Colourless base paint

A colorless base paint (Table 1) was used for preparing different paints with different pigments. The base paint was composed as follows:

**Table 1 - Colorless base paint:**

| | |
|---|---|
| Water deionized | 42.7 |
| Calgon N New | 0.4 |
| Bermocoll EHM 200 | 1.3 |
| Sodium hydroxide, 10 % | 0.8 |
| Byk 038 | 0.8 |
| Texanol | 0.7 |
| Butyl diglycol acetate | 0.7 |
| Dowanol DPnB | 1.6 |

(continued)

| | |
|---|---|
| Coapur 2025 | 0.7 |
| Mergal 723 K | 0.2 |
| Ecodis P 90 | 0.5 |
| Byk 349 | 0.3 |
| Mowilith LDM 6119, 50 % | 48.5 |
| Coapur 6050 | 0.8 |
| **Total** | **100.0** |
| | |
| *Solids content [wt%]* | *28.0* |
| *pH* | *8.0 - 9.0* |

The components used for the colorless base test paint and their function are known to the skilled person and listed in Table 2 hereto below.

**Table 2 - Materials for colorless base paint:**

| Colorless Base test paint | Producer | Chemical basis | Function |
|---|---|---|---|
| Water | In house, deionized | $H_2O$ | Solvent |
| Calgon N new | BK Giulini Chemie | Sodium polyphosphate | Wetting and dispersing agent |
| Bermocoll EHM 200 | AkzoNobel Corp. | Ethyl Hydroxyethyl cellulose | Thickener |
| Sodium hydroxide, 10 % | Various | NaOH solution | pH regulator |
| BYK 038 | Byk Chemie | Mineral oil basis | Defoamer |
| Texanol | Eastman | Ester-alcohol | Coalescing agent |
| Butyl diglycol acetate | Various | Ester | Coalescing agent |
| Dowanol DPnB | Dow | Dipropyleneglycol-n-butylether | Coalescing agent |
| Coapur 2025 | Coatex SA | Polyurethane | Rheology modifier |
| Coapur 6050 | Coatex SA | Polyurethane | Rheology modifier |
| ECODIS P 90 | Coatex SA | Sodium salt of acrylic polymer | Wetting and dispersing agent |
| Mergal 723K | Troy Chemie GmbH | Benzisothiazolone basis, without formaldehyde | Preservative |
| BYK 349 | | | |
| Mowilith LDM 6119,50% | Clariant | non-plasticized aqueous polymer dispersion based on styrene and an acrylic acid ester | Binder (copolymer) |

Ultrafine ground natural calcium carbonate (UF-GNCC)

An aqueous suspension of ground marble having a weight median particle diameter $d_{50}$ of 0.7 $\mu$m and a weight-based particle diameter $d_{98}$ of 4 $\mu$m, and particles < 2 $\mu$m of 90%, was used. The solids content of the aqueous suspension was 78 wt%.

Ground natural calcium carbonate (GNCC-1)

An aqueous suspension of ground marble having a weight median particle diameter $d_{50}$ of 1.6 $\mu$m and a weight-based particle diameter $d_{98}$ of 10 $\mu$m, residue on a 45 $\mu$m sieve (ISO 787/7) 20 ppm, was used as comparative material. The solids content of the aqueous suspension was 78.4 wt%.

Ground natural calcium carbonate (GNCC-2)

As a further comparative material, an aqueous suspension of ground marble was used having a weight median particle diameter $d_{50}$ of 5.7 $\mu$m and a weight-based particle diameter $d_{98}$ of 30 $\mu$m. The solids content of the aqueous suspension was 78 wt%.

Surface modified calcium carbonate (MCC)

Surface modified calcium carbonate (MCC) was obtained from 10 litres of an aqueous suspension of ground calcium carbonate in a mixing vessel obtained by adjusting the solids content of a ground marble calcium carbonate from Hustadmarmor Norway having a weight-based particle size distribution of 90 % less than 2 $\mu$m (Sedigraph), such that a solids content of 22 wt%, based on the total weight of the aqueous suspension, is obtained. In addition, a solution was prepared containing 30 wt% phosphoric acid. Whilst mixing the slurry, 0.83 kg of the phosphoric acid solution were added to said suspension over a period of 10 min at a temperature of 55 °C. Finally, after the addition of the phosphoric acid, the slurry was stirred for additional 5 min prior to adjusting the solids content.

The surface modified calcium carbonate (MCC) showed a volume median particle size $d_{50}$ of 1.06 $\mu$m, a volume-based $d_{98}$ of 4.95 $\mu$m and a specific surface area of 38.5 m$^2$/g (BET, nitrogen). The solids contents were adjusted to a range of from 47 to 67 wt% (see the details provided in the trials section hereinbelow).

**Trials**

Preparation of the pigment composition

1. Provide suspension of GNCC in a container
2. Place container under dissolver
3. Add suspension of MCC under agitation at 1 000 to 1 100 rpm
4. Stir for approx. 10 min.

The prepared inventive pigment compositions using UF-GNCC and MCC are summarized in the following:

| **73% solid (90:10)** | |
| --- | --- |
| UF-GNCC; 78% solids | 115.00 |
| MCC; 47% solids | 21.00 |
| | **136.00** |

| **73% solid (85:15)** | |
| --- | --- |
| UF-GNCC; 78% solids | 80.00 |
| MCC ; 55% solids | 20.00 |
| | **100.00** |

| **73% solid (80:20)** | |
| --- | --- |
| UF-GNCC; 78% solids | 74,87 |

(continued)

| | |
|---|---|
| **73% solid (80:20)** | |
| MCC; 55% solids | 26,54 |
| | **101.41** |
| **73% solid (70:30)** | |
| UF-GNCC; 78% solids | 90.00 |
| MCC; 63.5% solids | 47.00 |
| | **137.00** |
| | |
| **73% solid (60:40)** | |
| UF-GNCC; 78% solids | 77.00 |
| MCC; 67% solids | 60.00 |
| | **137.00** |

Preparation of the paint

Different paints, each having a final pigment volume concentration (PVC) of 70 %, were prepared by mixing the colorless base paint and the different aqueous pigment compositions described above under stirring conditions using a dissolver (approx. 10 min, 1 000 to 1 100 rpm). Where necessary, water was added to adjust the pigment volume concentration. The corresponding mixing ratio is indicated in Table 3 hereinbelow.

The comparative paints were prepared in an analogous manner using the materials indicated above (UF-GNCC, GNCC-1, GNCC-2).

Results

The optical properties and the viscosity of a paint prepared by using the inventive pigment composition and comparative pigments are summarized in Table 3. The methods used to determine the indicated parameters are described hereinabove.

As may be gathered from the optical properties indicated in Table 3, the paints prepared from the inventive pigment composition show satisfactory, good or even improved optical properties, in particular in terms of contrast ratio and matting properties.

Table 3:

| PAINT FORMULATIONS | SC % (pigm. comp.) | | 73% solid (100:0) | 73% solid (90:10) | 73% solid (85:15) | 73% solid (80:20) | 73% solid (70:30) | 73% solid (60:40) | 73% solid (0:100) | GNCC-1 (100:0) | GNCC-2 (100:0) |
|---|---|---|---|---|---|---|---|---|---|---|---|
| Basis paint, colorless | | | 32.10 | 32.10 | 32.10 | 32.10 | 32.10 | 32.10 | 32.10 | 32.10 | 32.10 |
| UF-GNCC(78%) | 78 | | 58.40 | | | | | | | | |
| UF-GNCC(78%) : MCC (55%) | 73 | | | | 62.32 | | | | | | |
| UF-GNCC(78%) : MCC (55%) | 73 | | | | | 62.32 | | | | | |
| UF-GNCC(78%) : MCC (63.5%) | 73 | | | | | | 62.32 | | | | |
| UF-GNCC(78%) : MCC (67%) | 73 | | | | | | | 62.32 | | | |
| MCC(67%) | 67 | | | | | | | | 67.90 | | |
| UF-GNCC(78%) : MCC (47%) | 73 | | | 62.32 | | | | | | | |
| GNCC-1 (78.4%) | 78.4 | | | | | | | | | 58.10 | |
| GNCC-2(78%) | 78 | | | | | | | | | | 58.40 |
| Water | | | 9.50 | 5.58 | 5.58 | 5.58 | 5.58 | 5.58 | | 9.80 | 9.50 |
| Total | | | 100.00 | 100.00 | 100.00 | 100.00 | 100.00 | 100.00 | 100.00 | 100.00 | 100.00 |
| PVC | | % | 70.0 | 70.0 | 70.0 | 70.0 | 70.0 | 70.0 | 70.0 | 70.0 | 70.0 |
| Density (solid) | | g/cm³ | 2.17 | 2.17 | 2.17 | 2.17 | 2.17 | 2.17 | 2.17 | 2.17 | 2.17 |
| Density (liquid) | | g/cm³ | 1.294 | 1.325 | 1.427 | 1.325 | 1.417 | 1.417 | 1.520 | 1.413 | 1.415 |
| Volume solids per litre | | ml | 311.48 | 319.06 | 343.32 | 318.89 | 341.08 | 341.08 | 318.43 | 340.31 | 340.85 |
| Volume solids per kg | | ml | 240.78 | 240.76 | 240.66 | 240.76 | 240.66 | 240.66 | 209.53 | 240.87 | 240.88 |
| Solids content by weight | | % | 54.43 | 54.42 | 54.39 | 54.42 | 54.39 | 54.39 | 47.36 | 54.45 | 54.45 |
| Pigment/binder (100% solids) | | | 5.84:1 | 5.84:1 | 5.84:1 | 5.84:1 | 5.84:1 | 5.84:1 | 5.84:1 | 5.84:1 | 5.84:1 |
| OPTICAL PROPERTIES (GAP 150 MU) | | | 73% solid (100:0) | 73% solid (90:10) | 73% solid (85:15) | 73% solid (80:20) | 73% solid (70:30) | 73% solid (60:40) | 73% solid (0:100) | GNCC-1 (100:0) | GNCC-2 (100:0) |
| Ry at C2° | DIN 53 140 | % | 90.4 | n/d | 90.7 | 90.7 | 90.8 | 90.7 | 91.5 | 88.0 | 86.7 |
| Ry over black at C2° | DIN 53 140 | % | 77.4 | n/d | 78.5 | 78.6 | 80.1 | 80.1 | 82.6 | 70.7 | 17.9 |
| Yellowness Index | | | 2.4 | n/d | 2.3 | 2.1 | 2.3 | 2.5 | 1.7 | 4.7 | 6.4 |

(continued)

| OPTICAL PROPERTIES (GAP 150 MU) | | | 73% solid (100:0) | 73% solid (90:10) | 73% solid (85:15) | 73% solid (80:20) | 73% solid (70:30) | 73% solid (60:40) | 73% solid (0:100) | GNCC-1 (100:0) | GNCC-2 (100:0) |
|---|---|---|---|---|---|---|---|---|---|---|---|
| Contrast ratio | ISO 2814 | % | 85.5 | n/d | 86.6 | 86.7 | 88.2 | 88.2 | 90.3 | 80.3 | 20.7 |
| Gloss 60° 150 $\mu$m gap | DIN 67 530 | | 2.9 | n/d | 2.8 | 2.8 | 2.9 | 2.8 | 2.7 | 2.5 | 1.0 |
| Gloss 85° 150 $\mu$m gap | DIN 67 530 | | 46.0 | n/d | 38.9 | 37.0 | 26.1 | 24.1 | 19.2 | 12.0 | 1.3 |
| **VISCOSITY** | | | | | | | | | | | |
| ICI Viscosity | | mPa·s | 110 | n/d | 210 | 200 | 180 | 200 | 220 | 100 | 70 |
| Viscosity, D=1 s-1 | | mPa·s | 10700 | n/d | 32400 | 29000 | 30400 | 32400 | 33600 | 12666 | 5030 |
| Viscosity, D=5 s-1 | | mPa·s | 3850 | n/d | 12000 | 11000 | 11300 | 12100 | 14520 | 4873 | 2560 |
| Viscosity, D=10 s-1 | | mPa·s | 2530 | n/d | 7940 | 7340 | 7500 | 7890 | 8010 | 3451 | 1990 |
| Viscosity, D=40 s-1 | | mPa·s | 1080 | n/d | 3230 | 3010 | 3050 | 3200 | 3340 | 1915 | 1100 |

**Claims**

1.  Aqueous pigment composition comprising:

    (i) ground natural calcium carbonate (GNCC) having a weight median particle diameter $d_{50}$ of 1.5 $\mu$m or less and a weight-based particle diameter $d_{98}$ of 5 $\mu$m or less; and
    (ii) surface modified calcium carbonate (MCC) being a reaction product of ground natural calcium carbonate (GNCC) and/or precipitated calcium carbonate (PCC) treated with $CO_2$ and one or more $H_3O^+$ ion donors, wherein the $CO_2$ is formed in situ by the $H_3O^+$ ion donors treatment and/or is supplied from an external source, said surface modified calcium carbonate (MCC) having a volume median particle diameter $d_{50}$ of 1.3 $\mu$m or less and a volume-based particle diameter $d_{98}$ of 10 $\mu$m or less;

    **characterized in that** the ground natural calcium carbonate (GNCC) and the surface modified calcium carbonate (MCC) are present in the aqueous pigment composition at a ratio of from 95:5 to 5:95, based on dry weights, wherein the aqueous pigment composition has a total solids content of from 50 to 85 wt%, based on the total weight of the aqueous pigment composition.

2.  The aqueous pigment composition according to claim 1, **characterized in that** the ground natural calcium carbonate (GNCC) has:

    (i) a weight median particle diameter $d_{50}$ in the range of from 0.05 to 1.5 $\mu$m, preferably from 0.1 to 1.3 $\mu$m, more preferably from 0.2 to 1 $\mu$m, and most preferably from 0.5 to 0.9 $\mu$m;
    (ii) a weight-based particle diameter $d_{98}$ in the range of from 3 to 5 $\mu$m, preferably from 3.2 to 4.8 $\mu$m, more preferably from 3.5 to 4.5 $\mu$m, and most preferably from 3.8 to 4.2 $\mu$m; and/or
    (iii) a weight-based particle diameter ratio $d_{98}/d_{50}$ of 3 or higher, preferably 4 or higher, and most preferably in the range of from 4.5 to 6.5.

3.  The aqueous pigment composition according to any of claims 1 or 2, **characterized in that** the surface modified calcium carbonate (MCC) has:

    (i) a volume median particle diameter $d_{50}$ in the range of from 0.05 to 1.3 $\mu$m, preferably from 0.1 to 1 $\mu$m, more preferably from 0.2 to 0.9 $\mu$m, and most preferably from 0.3 to 0.7 $\mu$m;
    (ii) a volume-based particle diameter $d_{98}$ in the range of from 3 to 10 $\mu$m, preferably from 3.5 to 8 $\mu$m, more preferably from 4 to 6 $\mu$m, and most preferably from 4.5 to 5.5 $\mu$m; and/or
    (iii) a volume-based particle diameter ratio $d_{98}/d_{50}$ of 10 or less, preferably 6 or less, and most preferably in the range of from 3.5 to 5.5.

4.  The aqueous pigment composition according to any of claims 1 to 3, **characterized in that** the surface modified calcium carbonate (MCC) has a specific surface area in the range of from 20 to 200 $m^2/g$, preferably from 25 to 100 $m^2/g$, and most preferably from 30 to 50 $m^2/g$, measured using nitrogen and the BET method according to ISO 9277:2010.

5.  The aqueous pigment composition according to any of claims 1 to 4, **characterized in that** the surface modified calcium carbonate (MCC) has an intra-particle intruded specific pore volume in the range of from 0.08 to 1.80 $cm^3/g$, preferably from 0.10 to 1.50 $cm^3/g$, and most preferably from 0.18 to 1.30 $cm^3/g$, calculated from mercury porosimetry measurement.

6.  The aqueous pigment composition according to any of claims 1 to 5, **characterized in that** the ground natural calcium carbonate (GNCC) and the surface modified calcium carbonate (MCC) are present in the aqueous pigment composition at a ratio of from 90:10 to 30:70, and preferably from 88:12 to 60:40, for example at a ratio of 85:15, each based on dry weights.

7.  The aqueous pigment composition according to any of claims 1 to 6, **characterized in that** the aqueous pigment composition has a total solids content of from 55 to 80 wt%, preferably from 60 to 78 wt%, and most preferably from 65 to 75 wt%, each based on the total weight of the aqueous pigment composition.

8.  Process for preparing an aqueous pigment composition comprising the following steps:

(a) providing an aqueous suspension of ground natural calcium carbonate (GNCC) having a weight median particle diameter $d_{50}$ of 1.5 $\mu$m or less and a weight-based particle diameter $d_{98}$ of 5 $\mu$m or less;

(b) providing an aqueous suspension of surface modified calcium carbonate (MCC) being a reaction product of ground natural calcium carbonate (GNCC) and/or precipitated calcium carbonate (PCC) treated with $CO_2$ and one or more $H_3O^+$ ion donors, wherein the $CO_2$ is formed in situ by the $H_3O^+$ ion donors treatment and/or is supplied from an external source, said surface modified calcium carbonate (MCC) having a volume median particle diameter $d_{50}$ of 1.3 $\mu$m or less and a volume-based particle diameter $d_{98}$ of 10 $\mu$m or less;

(c) contacting the aqueous suspension provided in step (a) and the aqueous suspension provided in step (b) to obtain an aqueous pigment composition comprising ground natural calcium carbonate (GNCC) and surface modified calcium carbonate (MCC); and

(d) optionally, adjusting the solids content of the aqueous pigment composition of step (c);

**characterized in that** the ground natural calcium carbonate (GNCC) and the surface modified calcium carbonate (MCC) are present in the aqueous pigment composition at a ratio of from 95:5 to 5:95, based on dry weights, wherein the aqueous pigment composition has a total solids content of from 50 to 85 wt%, based on the total weight of the aqueous pigment composition.

9. The process according to claim 8, **characterized in that** the ground natural calcium carbonate (GNCC) of step (a) has:

(i) a weight median particle diameter $d_{50}$ in the range of from 0.05 to 1.5 $\mu$m, preferably from 0.1 to 1.3 $\mu$m, more preferably from 0.2 to 1 $\mu$m, and most preferably from 0.5 to 0.9 $\mu$m;

(ii) a weight-based particle diameter $d_{98}$ in the range of from 3 to 5 $\mu$m, preferably from 3.2 to 4.8 $\mu$m, more preferably from 3.5 to 4.5 $\mu$m, and most preferably from 3.8 to 4.2 $\mu$m; and/or

(iii) a weight-based particle diameter ratio $d_{98}/d_{50}$ of 3 or higher, preferably 4 or higher, and most preferably in the range of from 4.5 to 6.5.

10. The process according to any of claims 8 or 9, **characterized in that** the surface modified calcium carbonate (MCC) of step (b) has:

(i) a volume median particle diameter $d_{50}$ in the range of from 0.05 to 1.3 $\mu$m, preferably from 0.1 to 1 $\mu$m, more preferably from 0.2 to 0.9 $\mu$m, and most preferably from 0.3 to 0.7 $\mu$m;

(ii) a volume-based particle diameter $d_{98}$ in the range of from 3 to 10 $\mu$m, preferably from 3.5 to 8 $\mu$m, more preferably from 4 to 6 $\mu$m, and most preferably from 4.5 to 5.5 $\mu$m; and/or

(iii) a volume-based particle diameter ratio $d_{98}/d_{50}$ of 10 or less, preferably 6 or less, and most preferably in the range of from 3.5 to 5.5.

11. The process according to any of claims 8 to 10, **characterized in that** the surface modified calcium carbonate (MCC) of step (b) has a specific surface area in the range of from 20 to 200 $m^2/g$, preferably from 25 to 100 $m^2/g$, and most preferably from 30 to 50 $m^2/g$, measured using nitrogen and the BET method according to ISO 9277:2010.

12. The process according to any of claims 8 to 11, **characterized in that** the surface modified calcium carbonate (MCC) of step (b) has an intra-particle intruded specific pore volume in the range of from 0.08 to 1.80 $cm^3/g$, preferably from 0.10 to 1.50 $cm^3/g$, and most preferably from 0.18 to 1.30 $cm^3/g$, calculated from mercury porosimetry measurement.

13. The process according to any of claims 8 to 12, **characterized in that** the ground natural calcium carbonate (GNCC) and the surface modified calcium carbonate (MCC) are present in the aqueous pigment composition at a ratio of from 90:10 to 30:70, and preferably from 88:12 to 60:40, for example at a ratio of 85:15, each based on dry weights.

14. The process according to any of claims 8 to 13, **characterized in that** the aqueous pigment composition has a total solids content of from 55 to 80 wt%, preferably from 60 to 78 wt%, and most preferably from 65 to 75 wt%, each based on the total weight of the aqueous pigment composition.

15. Use of the aqueous pigment composition according to any of claims 1 to 7 in paints or coatings.

16. Use of the aqueous pigment composition according to any of claims 1 to 7 as titanium dioxide enhancer.

17. Paint or coating comprising the aqueous pigment composition according to any of claims 1 to 7.

Europäisches
Patentamt

European
Patent Office

Office européen
des brevets

# EUROPEAN SEARCH REPORT

Application Number

EP 17 16 4661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 3 085 742 A1 (OMYA INT AG [CH]) 26 October 2016 (2016-10-26) * paragraphs [0014], [0016] - [0029], [0038] - [0056], [0068] - [0080], [0113] - [0123]; claims 1-15 * ----- | 1-17 | INV. C09C1/02 D21H17/67 |
| A | EP 2 014 830 A1 (ALPHA CALCIT FUELLSTOFF GMBH [DE]) 14 January 2009 (2009-01-14) * paragraph [0012]; claims 1-12 * ----- | 1-17 | |

TECHNICAL FIELDS
SEARCHED      (IPC)

C09C
D21H

The present search report has been drawn up for all claims

| Place of search | Date of completion of the search | Examiner |
|---|---|---|
| The Hague | 6 October 2017 | Siebel, Eric |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 17 16 4661

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2017

| Patent document cited in search report | | Publication date | Patent family member(s) | | Publication date |
|---|---|---|---|---|---|
| EP 3085742 | A1 | 26-10-2016 | AR | 104325 A1 | 12-07-2017 |
| | | | EP | 3085742 A1 | 26-10-2016 |
| | | | TW | 201700399 A | 01-01-2017 |
| | | | UY | 36634 A | 30-11-2016 |
| | | | WO | 2016169753 A1 | 27-10-2016 |
| EP 2014830 | A1 | 14-01-2009 | BR | PI0813732 A2 | 01-09-2015 |
| | | | CA | 2691057 A1 | 31-12-2008 |
| | | | CN | 101688372 A | 31-03-2010 |
| | | | EP | 2014830 A1 | 14-01-2009 |
| | | | EP | 2160497 A2 | 10-03-2010 |
| | | | JP | 2010530930 A | 16-09-2010 |
| | | | KR | 20100039826 A | 16-04-2010 |
| | | | US | 2010180800 A1 | 22-07-2010 |
| | | | US | 2013131249 A1 | 23-05-2013 |
| | | | WO | 2009000659 A2 | 31-12-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2684916 A1
- EP 2264108 A1
- EP 2264109 A1
- EP 3085742 A1
- US 20140158022 A1
- EP 2447213 A1
- EP 2524898 A1
- EP 2371766 A1
- EP 2840065 A1
- WO 2013142473 A1
- EP 0607840 A1
- WO 0039222 A1
- WO 2004083316 A1
- WO 2005121257 A2
- WO 2009074492 A1
- US 20040020410 A1

**Non-patent literature cited in the description**

- **GANE, P.A.C. ; KETTLE, J.P. ; MATTHEWS, G.P. ; RIDGWAY, C.J.** Void Space Structure of Compressible Polymer Spheres and Consolidated Calcium Carbonate Paper-Coating Formulations. *Industrial and Engineering Chemistry Research,* 1996, vol. 35 (5), 1753-1764